# EUROPEAN PATENT APPLICATION

(11) **EP 2 106 193 A1**
(43) Date of publication of application: **30.09.2009**
(21) Application number: 08103070.2
(22) Date of filing: 28.03.2008
(51) Int. Cl.: H04W 88/16

(54) **Gateway device for coupling a local network with a wireless access network, base station of a wireless access network and method for exchanging information between a local network and a wireless access network**

(71) Applicant: Nokia Siemens Networks Oy, 02610 Espoo (FI)
(72) Inventor: Hu, Dr. Zhen Ping, 100102, chaoyang district, Beijing (CN); Huang, Xue Gang, 100028, Choayang District, Beijing (CN); Lampe, Dr. Mattias, 100102, chaoyang district, Beijing (CN); Tian, Dr. Ji Feng, 100102, Chaoyang District, Beijing (CN); Wang, Xinglin, 100102, Chaoyang district, Beijing (CN); Zhang, Jie, 102208, Beijing (CN)
(74) Representative: Bruglachner, Thomas E.

(57) **Abstract**

The invention relates to a gateway device (10) for coupling a local network (12) with a wireless access network (14) comprising at least one first interface (16) for a local network (12), at least one second interface (18) for a wireless access network (14), and processing means (20) being configured to signal information related to the characteristics of devices (22) and/or links (24) in the at least one local network (12) to an entity (26) of the at least one wireless access network (14) in order to enable the entity (26) to adapt the communication with the gateway device (10) to the conditions of the at least one local network (12).

## Description

The invention relates to a gateway device for coupling a local network with a wireless access network according to claim 1, a base station of a wireless access network according to claim 5 and a method for exchanging information between a local network and a wireless access network according to claim 9.

In the typical application scenario of a mobile access network, each UE (User Equipment) directly hosts a client application and, thus, is the termination point of a data connection in the wireless access network. In contrast to this, a routing device coupling a wired or wireless local network, for example a LAN (Local Area Network) with a wireless access network merely has a gateway function handling the communication between both networks, but is not the endpoint of a data connection. Therefore, a data connection from a client of the local network to another client outside the local network over the wireless access network comprises the radio link between the routing device and an entity of the wireless access network, typically a base station, and another wired or wireless link in the local network.

It is an object of the present invention to provide a gateway device for coupling a local network with a wireless access network, a base station of a wireless access network and a method for exchanging information between a local network and a wireless access network, which allow to optimize data connections with regard to end-to-end performance and QoS (Quality of Service) criteria.

This object is achieved by a gateway device for coupling a local network with a wireless access network with the features according to claim 1, a base station of a wireless access network with the features of claim 5 and a method for exchanging information between a local network and a wireless access network with the features according to claim 9. Further embodiments of the invention are subject to the dependent claims.

A basic idea of the invention is to allow information related to the characteristics of devices and links in a local network or home network to be communicated to an entity, for example a base station, in the wireless access network in order to enable the entity to adapt the communication with the gateway device to the conditions of the at least one local network, particularly the communication conditions in the local are network or the communication capabilities of the clients of the local network. The local network may by for example an Ethernet based LAN or WLAN (Wireless LAN), while the wireless access network may be for example a cellular radio communication network such as a UMTS (Universal Mobile Telecommunications System) or a 3G LTE (3^{rd} generation project long-term evolution) technology or another WBA (Wireless Broadband Access) system, for example a WiMAX (Worldwide Interoperability for Microwave Access) or WiBro (Wireless Broadband) system. The invention allows to optimize data connections with regard to end-to-end performance and QoS criteria, since the entity of the wireless access system receives information about devices and links in the local network which may be used to adapt the radio link between the gateway device and the entity such that the required end-to-end performance and QoS criteria may be met.

An embodiment of the invention provides a gateway device for coupling a local network with a wireless access network comprising
at least one first interface for a local network,
at least one second interface for a wireless access network, and
processing means being configured to signal information related to the characteristics of devices and/or links in the at least one local network to an entity of the at least one wireless access network in order to enable the entity to adapt the communication with the gateway device to the conditions of the at least one local network. The gateway device may be applied as a so called home node in the home of a user in order to couple a home network such as a private LAN or WLAN with a public mobile radio access system such as a 3G LTE mobile communication system. The gateway device not only handles the communication between the local network and the wireless access system, but additionally signals information about devices and links in the local network to the entity of the wireless access network, so that the entity is enabled to better adapt the communication to the conditions of the local network and, thus, to better use available resources for data connections for example between clients of the home network
and clients of the wireless access network.

In a further embodiment of the invention, the processing means may be configured to signal to an entity of the at least one wireless access network the type of the gateway device in order to allow the entity to distinguish the gateway device from normal user equipment of the wireless access network and to optimize communication with the gateway device. For example, the gateway device may signal to the entity "home node" as device type so that the entity can distinguish the gateway device from normal UE (User Equipment) of the wireless access network and to adapt its communication with the gateway device in accordance with typical characteristics of the signalled device type, for example by exploiting the quasi time invariance of the communication channel with the gateway device, because the gateway device is usually a fixed and not a mobile device. This embodiment has the advantage that the signalling overhead is moderate and may be implemented at relatively low costs.

The processing means may be configured in a further embodiment of the invention to signal to an entity of the at least one wireless access network information about the links to the clients in the at least one local network. The signalled information about the links to the clients may comprise for example the delay of a link to a specific client. This enables the entity of the wireless access network to further improve the adaptation of its data scheduling so that the delay on the link between the entity and the gateway device is adjusted in accordance with the delay of the link to the specific client in the local network.

In a further embodiment of the invention, the processing means may be configured to signal information about each data connection established by the gateway device within the at least one local network by signalling attributes about the data connections to the entity of the at least one wireless access network. The attributes may for example comprise detailed information about certain links such as the delay and reliability of a link. Thus, the entity of the wireless access network is able to distinguish different characteristics of the links corresponding to different logical connections and may adjust scheduling and improve QoS. The entity may be for example informed from the gateway device about the attributes during a connection setup, i.e. when a new connection is established in the local network, the gateway device may automatically signal respective attributes about the established connection to the entity for adapting its scheduling so that the delay on the link between the entity and the gateway device for the corresponding data connection may be minimized.

The invention provides in a further embodiment a base station of a wireless access network, wherein the base station is adapted to receive signalled information from a gateway device according to the invention and as described above and to adapt the communication with the gateway device to the conditions of the at least one local network. The base station may be provided and configured to be applied in a 3G LTE technology or another WBA (Wireless Broadband Access) system, for example a WiMAX or WiBro system, which offer a degree of flexibility in resource allocation so that the communication with the gateway device may be adjusted to meet required end-to-end performance and QoS criteria of data connections between clients of the local network and the wireless access network.

The base station may be in a further embodiment adapted to adjust resource allocation, data scheduling and/or signal processing schemes to the conditions of the at least one local network. For example, the base station may take into account knowledge received via information signalled by the gateway device, whether the last meters to clients in the local network are wired or wireless connections, for adjusting the scheduling of data over the link to the gateway device. Or the base station may adjust the resource allocation to the data throughput of a connection in the local network, or take the delay of this connection into account for adjusting its signal processing schemes.

The base station may be further adapted in an embodiment of the invention to adjust its link adaptation and scheduling schemes in accordance with the quasi time invariance of the communication channel between the base station and the gateway device. As mentioned above, the gateway device will be in most applications a fixed device, i.e. installed at the home of a user, and not a mobile device such as a mobile phone. Thus, it may be assumed that in most applications the communication channel between the gateway device and the base station is quasi time invariant so that the base station may adjust link adaptation and scheduling schemes respectively. This may result in a further improved performance of the data connection between the gateway device and the base station.

According to a further embodiment of the invention, the base station may be adapted to estimate the communication channel characteristics, e.g. the transfer function, with increased accuracy by averaging over a certain period of time assuming that the communication channel is quasi time invariant and exploiting the improved estimate to improve the efficiency and/or reliability of the data transfer. Thus, with the increased estimation accuracy of the communication channel characteristics the communication quality with the gateway device with regard to reliability and QoS criteria may be further improved.

The invention provides in a further embodiment a method for exchanging information between a local network and a wireless access network comprising the step of signalling information related to the characteristics of devices and/or links in the at least one local network to an entity of the at least one wireless access network in order to enable the entity to adapt the communication with the gateway device to the conditions of the at least one local network. The method may be for example implemented as software embedded in a gateway device according to the invention and as described above, particularly as a part of the firmware of the device.

According to a further embodiment of the invention, a computer program is provided, wherein the computer program may be enabled to carry out the method according to the invention when executed by a computer.

According to an embodiment of the invention, a record carrier such as a CD-ROM, DVD, memory card, floppy disk or similar storage medium may be provided for storing a computer program according to the invention.

These and other aspects of the invention will be apparent from and elucidated with reference to the embodiment(s) described hereinafter.

The invention will be described in more detail hereinafter with reference to exemplary embodiments. However, the invention is not limited to these exemplary embodiments.

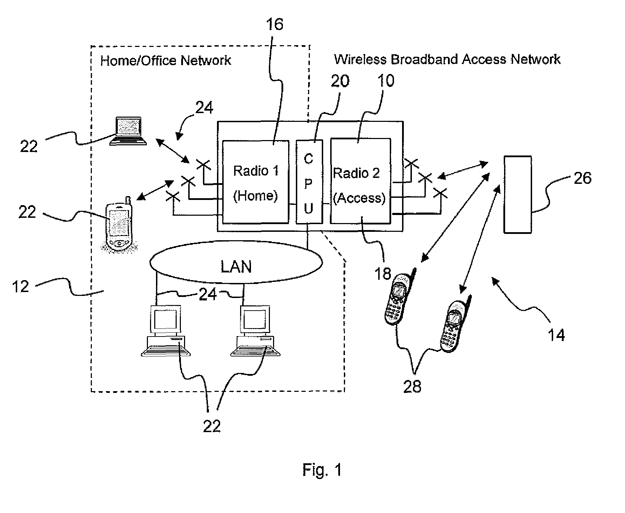

Fig. 1 shows an embodiment of a basic gateway device according to the invention, i.e. a gateway device between a wireless access network and one or more wired and/or wireless local networks.

In the following, functional similar or identical elements may be denoted with the same reference numerals.

The embodiment of the present invention, which is described in the following, is related to a the concept of the so-called Home Node, i.e. a device acting as a gateway between a local network such as a LAN, possibly including WLAN equipment, and a cellular network (or wireless broadband access network, WBA), thus giving clients connected to the LAN/WLAN access to the cellular network, e.g. in order to provide them with Internet access. The basic scenario for a Home Node is depicted in Fig. 1. The Home Node 10 couples a local network 12 with a wireless access network 14. The local network 12 comprises a wired LAN and a wireless LAN connecting several clients 22 such as Personal Computers and Personal Digital Assistants. The Home Node 10 comprises a first radio interface 16 for the wireless LAN and a first interface (not shown) for the wired LAN. Both first interfaces connect all clients 22 via either wireless or wired links 24. Furthermore, the Home Node 10 comprises a second radio interface 18 for the wireless access network 14. The second radio interface 18 enables communication with a base station 26 of the wireless access network 14 via a communication channel, assigned to the Home Node 10. Parameters of the communication channel may be adapted by the base station 26 as will be described in the following. The communication between both coupled networks 12 and 14 is handled by a dedicated communications processor 20 of the Home Node 10. The processor 20 is able to handle multiple protocols and to route data packets from one network into the other network and vice versa.

In the following it is assumed that the abovementioned access network 14 is a cellular network based on the 3G LTE technology, therefore the term eNodeB (for "evolved NodeB") will be used interchangeably with the term "base station" and the term UE (user equipment) will be used for a client device 28 in the cellular network 14. The techniques of the present invention, however, can be applied to other WBA systems as well, depending on the underlying technology. The present invention may for example be applicable to WiMAX or WiBro systems as well.

Contrary to the typical application scenario of a mobile or wireless access network 14 where each UE 28 directly host the client application and thus is the termination point of the data connection, the Home Node 10 merely has a gateway function but is not the endpoint of a data connection. The link between the base station 26 and the application clients does not only comprise the radio link of the access network 14 but additionally another wired or wireless link 24 in the local network 12 of the Home Node 10.

While the base station 26 may have detailed knowledge of the radio channel between itself and all connected UEs 28 and Home Nodes 10, it will normally not be able to obtain any information about the type, quality and limitations of the links 24 between the Home Node 10 and its connected clients 22. Decisions by the base station 26 regarding resource allocation and scheduling based on QoS requirements of the data connection and channel quality of the radio link may therefore be suboptimal with respect to end-to-end performance and QoS criteria.

The Home Node 10 according to an embodiment of the present invention and as shown in Fig. 1 is now adapted to allow information related to the characteristics of devices 22 and links 24 in the home network 12 to be communicated to the base station 26 or some other entity in the access network 14 in order to allow the base station 26 to adapt its resource allocation, data scheduling and possibly also its signal processing schemes to the conditions in the home network 12, e.g. by accounting for technical limitations of the client devices 22 or for adverse link conditions within the home network 12. To this aim the Home Node 10 is adapted to provide the respective information and send it to the base station 26 by some suitable signalling mechanism. In order to accomplish this special signalling of information about communication conditions in the home network 12, the communications processor 20 is further adapted, for example by comprising a dedicated signalling unit, or configured, for example by being programmed with a dedicated software, to signal information related to the characteristics of the devices 22 and/or links 24 in the local network 12 to the base station 26 of the wireless access network 14. The signalled information particularly comprises information about the delay, signal quality, interference and local traffic load of a link 24 and information about technical limitations of clients 22 such as their radio interfaces. This information is signalled by the processor 20 via the second radio interface 18 to the base station 26. The base station 26 receives the signalled information from the Home Node 10 and adapts the communication with the Home Node 10 to the conditions of the local network 10 and signalled from the Home Node 10.

In the most basic implementation of the signalling by the Home Node 10 according to the invention, the base station 26 may be informed by some kind of signalling that the Home Node is a "Home Node", i.e. the base station can distinguish the Home Node 10 from a normal UE 28. This will allow the base station 26 to optimize the link adaptation and scheduling schemes accordingly, e.g. by exploiting the quasi-time-invariance of the channel resulting from the fact that the Home Node 10 is usually not mobile. This knowledge can even be exploited for an adaptive signal processing in the base station 26. For example the channel estimation accuracy can be improved by averaging over a certain period of time, assuming that the channel will nor vary quickly.

In further implementations of the signalling by the Home Node 10 according to the invention, the Home Node 10 will not only disclose information about its own role within the access network but also about the links 24 to its own clients 22. In the following, some examples of this extended signalling are described:
- The home network 12 may have some clients 22 connected via Ethernet or other wired media and others connected wire-lessly e.g. through WLAN. WLAN and Ethernet will typically have very different delay and reliability. If the base station 26 can distinguish different characteristics of the links 24 corresponding to different logical connections, scheduling can be adjusted and QoS can be improved (i.e. not only the knowledge about QoS requirements but also information about the links 24 in the home network 12, e.g. the rough knowledge whether the last meters are WLAN or Ethernet, could be taken into account for the scheduling). This may be accomplished by introducing additional attributes to each data connection established through the Home Node 10. During connection setup the Home Node 10 will inform the base station 26 about the attributes related to the corresponding local link. For example an attribute indicating "high delay on the local link" may cause the base station 26 to adapt its scheduling so that the delay on the link between base station 26 and Home Node 10 for the corresponding data connection is minimized.
- In case the home network is WLAN based, and bad signal quality, high interference or high load of local traffic limit the WLAN throughput, the Home Node 10 can inform the base station 26 about such a (temporary or permanent) bottleneck so the base station 26 may update its own resource planning accordingly and e.g. allocate fewer resources of the access network to those clients on the local network that are affected by the poor link quality. Similarly, congestion of a wired network may be detected by the Home Node 10.
- A number of technically limited clients 22 of the Home Node 10, e.g. IEEE802.11b clients on an 11g/n WLAN, may compete for limited resources. Only the Home Node 10 knows that (irrespective of the desired data rates of the individual clients) the sum data rate of these clients 22 is limited. Knowledge of these limitations allows a better scheduling at the base station 26 that could not be achieved by considering the QoS requirements of the data connections separately. This requires a type of signalling that slightly exceeds the assignment of attributes to data connections or to individual clients 22. It is required to communicate sum data rate limitations (or similar attributes) for a group of connections instead.

An important aspect of such information exchange between the Home Node 10 and the base station 26 becomes obvious in situations where the link 24 between Home Node 10 and client 22 cannot possibly satisfy the QoS requirements of the application related to the connection. In such a case, the suggested scheme will enable the base station 26 to detect that QoS requirements will inevitably be violated and can therefore itself reduce the efforts to satisfy the QoS requirement, i.e. it can assign some resources originally required by the corresponding data connection to other users for the time the bottleneck on the home network 12 persists.

The invention may be applied in standards related to wireless access networks such as 3G LTE (TDD) and is suitable for application in a Home Node or a similar device, i.e. a stationary client on a wireless access network. The invention also requires special features of the base station, such as the adaptation of the communication with the gateway device to the conditions of the local network. The invention allows to improve the perceived QoS for the user, offers an improved and more stable performance, and allows a more efficient bandwidth utilization.

### List of abbreviations

- 3G LTE: 3rdGeneration Long Term Evolution
- LAN: Local network
- UMTS: Universal Mobile Telecommunications System
- WBA: Wireless Broadband Access
- WiMAX: Worldwide Interoperability for Microwave Access
- WiBro: Wireless Broadband
- WLAN: Wireless Local network

## Claims

1. A gateway device (10) for coupling a local network (12) with a wireless access network (14) comprising at least one first interface (16) for a local network (12),
at least one second interface (18) for a wireless access network (14), and
processing means (20) being configured to signal information related to the characteristics of devices (22) and/or links (24) in the at least one local network (12) to an entity (26) of the at least one wireless access network (14) in order to enable the entity (26) to adapt the communication with the gateway device (10) to the conditions of the at least one local network (12).

2. The device of claim 1, wherein the processing means (20) are further configured to signal to an entity (26) of the at least one wireless access network (14) the type of the gateway device (10) in order to allow the entity (26) to distinguish the gateway device (10) from normal user equipment (28) of the wireless access network (14) and to optimize communication with the gateway device (10).

3. The device of claim 1 or 2, wherein the processing means are configured to signal to an entity of the at least one wireless access network information about the links to the clients in the at least one local network.

4. The device of claim 3,wherein
the processing means (20) are further configured to signal information about each data connection (24) established by the gateway device (10) within the at least one local network (12) by signalling attributes about the data connections (24) to the entity (26) of the at least one wireless access network (14).

5. A base station (26) of a wireless access network (14), wherein the base station (26) is adapted to receive signalled information from a gateway device (10) of any of the preceding claims and to adapt the communication with the gateway device (10) to the conditions of the at least one local network (12).

6. The base station of claim 5,
being further adapted to adjust resource allocation, data scheduling and/or signal processing schemes to the conditions of the at least one local network (12).

7. The base station of claim 6,
being further adapted to adjust its link adaptation and scheduling schemes in accordance with the quasi time invariance of the communication channel between the base station (26) and the gateway device (10).

8. The base station of claim 7,
being further adapted to estimate the communication channel characteristics with increased accuracy by averaging over a certain period of time assuming that the communication channel is quasi time invariant and exploiting the improved estimate to improve the efficiency and/or reliability of the data transfer.

9. A method for exchanging information between a local network (12) and a wireless access network (14) comprising the step of
signalling information related to the characteristics of devices (22) and/or links (24) in the at least one local network (12) to an entity (26) of the at least one wireless access network (14) in order to enable the entity (26) to adapt the communication with the gateway device (10) to the conditions of the at least one local network (12).

10. A computer program enabled to carry out at least a part of the method according to claim 9 when executed by a computer.

11. A record carrier storing a computer program according to claim 10.
